# EUROPÄISCHE PATENTSCHRIFT

(11) **EP 2 512 871 B1**
(45) Veröffentlichungstag und Bekanntmachung des Hinweises auf die Patenterteilung: **26.02.2014**
(21) Anmeldenummer: 10790389.0
(22) Anmeldetag: 06.12.2010
(51) Int. Cl.: B60R 19/26

(54) **CRASHBOX MIT VERÄNDERBARER STEIFIGKEIT UND VERFAHREN ZUR VERÄNDERUNG EINER STEIFIGKEIT EINER SOLCHEN CRASHBOX**
CRASHBOX WITH VARIABLE STIFFNESS AND METHOD FOR MODIFICATION OF STIFFNESS OF SUCH CRASHBOX
CRASHBOX AVEC UNE RAIDEUR VARIABLE ET PROCEDE DE MODIFICATION DE LA RIGIDITÉ DE CRASHBOX

(30) Priorität: 14.12.2009 DE 102009054616
(43) Veröffentlichungstag der Anmeldung: 24.10.2012
(73) Patentinhaber: Robert Bosch GmbH, 70442 Stuttgart (DE)
(72) Erfinder: FREIENSTEIN, Heiko, 71263 Weil Der Stadt (DE); FRIEDRICH, Thomas, 71691 Freiberg A. N. (DE); KOENNING, Markus, 70469 Stuttgart (DE)
(86) Internationale Anmeldenummer: PCT/EP2010/068938
(87) Internationale Veröffentlichungsnummer: WO 2011/073049

(56) Entgegenhaltungen:
- DE-A1-102004 014 776
- DE-A1-102005 038 591
- US-A1- 2005 263 336

## Beschreibung

### Stand der Technik

Die Erfindung betrifft eine Crashbox mit veränderbarer Steifigkeit bzw. ein Verfahren zur Veränderung der Steifigkeit einer solchen Crashbox nach der Gattung der unabhängigen Patentansprüche.

Aus DE 197 45 651 A1 ist ein Pralldämpfer für ein Kraftfahrzeug bekannt. Dieser Pralldämpfer umfasst eine Prallplatte, auf die die Aufprallkraft einwirkt, sowie ein elastisch verformbares Bauteil in Aufprallrichtung anschließend an die Prallplatte, durch dessen elastische Verformung beim Aufprall Energie absorbiert wird, wobei dem elastisch verformbaren Bauteil mindestens ein durch die Prallplatte beaufschlagbares und beim Fahrzeugaufprall energieabsorbierend plastisch verformbares Bauteil zuschaltbar ist.

In der DE 10 2004 014 776 A1 wird ein Längsträger als crashbox für ein Fahrzeug nach dem Oberbegriff von Anspruch 1 offenbart. Der Längsträger ist zwischen einem Stoßfängerquerträger und einer Fahrgastzelle angeordnet. Erfindungsgemäß weist der Längsträger wenigstens einen unmittelbar oder mittelbar an der Fahrgastzelle ortsfest angeordneten Rohrabschnitt auf, in dem zur Ausbildung einer Zylinder-Kolben-Anordnung ein Kolben verschiebbar aufgenommen ist. Zudem ist wenigstens eine Energieabsorptionseinrichtung vorgesehen, die in einer Wirkverbindung mit der Zylinder-Kolben-Anordnung steht.

Die DE 10 2005 038 591 A1 offenbart eine Kontaktsensorik für ein Fahrzeug mit mindestens einer an einem Stoßfänger angeordneten ersten Sensoreinheit, deren erste Sensordaten zur Aktivierung eines Fußgängerschutzsystems auswertbar sind. Erfindungsgemäß ist mindestens eine im vorderen Fahrzeugbereich angeordnete zweite Sensoreinheit vorhanden, deren zweite Sensordaten zur Aktivierung eines Insassenschutzsystems auswertbar sind.

Die US2005263336A1 beschreibt ein Festigkeitssteuergerät für einen Fahrzeugkörper, das unterschiedliche Deformationszustände in Abhängigkeit von unterschiedlichen Aufprallenergien ermöglicht.

### Offenbarung der Erfindung

Die erfindungsgemäße Crashbox mit veränderbarer Steifigkeit bzw. das Verfahren zur Veränderung einer Steifigkeit einer Crashbox mit den Merkmalen der unabhängigen Patentansprüche haben dem gegenüber den Vorteil, dass nunmehr die Crashbox ein Plausibilisierungselement aufweist, das die Änderung der Steifigkeit zusätzlich zu dem Signal der ersten Sensorik zur Erfassung der Unfallsituation beeinflusst. Damit liegt ein der Crashbox integriertes Sensierungskonzept vor, das eine Plausibilisierung dieser Sensierung leistet. Die Vorteile einer solchen erfindungsgemäßen Crashbox sind in den Bereichen Leistung, Kosten und Stückzahl zu finden. Durch eine Modularisierung ist ein Re-Use möglich, insbesondere ergeben sich Stückzahl-Effekte, was sich kostenmäßig positiv auswirkt. Re-Use bedeutet, dass gleiche Bauteile (wie z.B. der Sensor) in unterschiedlich großen Crashboxen oder unterschiedliche Crashboxprinzipien einbaubar sind. Die Crashbox ist in der erfindungsgemäßen Ausführung autark, d.h. es liegt eine so genannte Stand-Alone-Fähigkeit vor, was sich ebenfalls positiv hinsichtlich der Kosten auswirkt. Weiterhin kann die erfindungsgemäße Crashbox dazu verwendet werden, um ein hochwertigeres Signal zu erzeugen, so dass eine optimierte Leistung möglich ist.

Die erfindungsgemäße Crashbox ist ein Teil der Fahrzeugfrontstruktur, deren Steifigkeit veränderbar ist. Diese Steifigkeit hat mindestens zwei Zustände. Vorzugsweise ist die Crashbox im Ausgangszustand hart, so dass so viel wie möglich an Crashenergie absorbiert werden kann. In Situationen von Crash mit niedriger Geschwindigkeit soll diese Crashbox weicher geschaltet werden. Das Ziel dieser weicheren Einstellung ist, dass die Steifigkeit niedrig ist, und dass bei solchen niedrigen Aufprallgeschwindigkeiten eine Soll-Deformationsstelle im Fahrzeugvorderbau vorliegt. Damit kann garantiert werden, dass die Deformation nur in der Crashbox auftritt, wo es auch gewünscht ist. Dies führt zu geringeren Reparaturkosten. Würde nämlich bei einem leichten Crash wie bei dem sogenannten AZT (Allianz-Zentrum für Technik) Crash der Längsträger deformiert werden, könnte dies von den Kosten her einem Totalschaden entsprechen. Ist nur die Crashbox betroffen, dann kann diese leicht ausgetauscht werden, insbesondere in der erfindungsgemäßen Ausbildung und die Kosten halten sich im Rahmen.

Die Crashbox ist ein Element aus Metall und gegebenenfalls anderen Komponenten, wobei die Crashbox zum Einbau zwischen einem Querträger und einem Längsträger eines Fahrzeugs konfiguriert ist. D.h. es kann eine Verschraubung, Vernietung und/oder Verschweißung mit dem Querträger und/oder Längsträger erfolgen. Diese Crashbox ist in ihrer Steifigkeit veränderbar, so dass sie auf Crash oder Precrashsituationen konditioniert werden kann. Die Steifigkeit bestimmt wie viel Crashenergie in Deformation umgewandelt wird. Die Crashbox kann beispielsweise ein so genanntes Deformationselement, beispielsweise ein Rohr aufweisen, das je nach Crashsituation näher oder weniger plastisch verformt ist. Dazu sind verschiedenste Möglichkeiten denkbar, zum einen kann solch ein Rohr je nach Anforderung verschieden verjüngt werden, zum anderen kann dieses Rohr mehr oder weniger gefaltet werden, oder es ist auch möglich über eine so genannte Schneidearbeit Crashenergie abzubauen. Eine weitere Möglichkeit der plastischen Verformung ist, dass Deformationselement aufzustülpen.

Ein Querträger eines Fahrzeugs ist beispielsweise ein Element aus Stahl oder einem anderen Metall, das quer zur Fahrzeugslängsrichtung eingebaut ist und an dem verschiedenste Komponenten des Fahrzeugs angebracht werden können. Ein Längsträger ist demnach ein Fahrzeugelement, das ebenfalls aus Metall ausgeführt ist, das in Fahrzeuglängsrichtung angeordnet ist und eine hohe Steifigkeit aufweist, um bei einem schweren Crash durch seine Deformation möglichst viel an Crashenergie abzubauen. Von den Längsträgern sind üblicherweise zwei in einem Fahrzeug eingebaut. Es ist jedoch auch möglich, beispielsweise bei neuartigen Fahrzeug- oder Mobilitätskonzepten lediglich nur einen Längsträger einzubauen. Auch mehr als zwei Längsträger wären möglich.

Die erste Sensorik zur Erfassung einer Unfallsituation liefert ein Signal, das diese Unfallsituation kennzeichnet. Daher kann es sich bei der ersten Sensorik um eine Aufprallsensorik und/oder eine so genannte Precrashsensorik handeln, wobei eine Aufprallsensorik einen tatsächlichen Aufprall registriert, beispielsweise eine Beschleunigungssensorik, eine Körperschallsensorik, eine Kraftsensorik, eine Luftdrucksensorik, usw. und eine Precrashsituation erkennt ein Objekt vor einem möglichen Aufprall und liefert Daten über dieses Objekt, beispielsweise die Relativgeschwindigkeit zwischen dem Ego-Fahrzeug und dem Objekt des Abstands und weitere Parameter. Als eine solche Precrashsensorik kann eine Radar, Lidar, Video, Ultraschall und eben auch eine Hochfrequenzsensorik verwendet werden. Die Crashbox weist selbst diese erste Sensorik auf, d.h. die erste Sensorik ist ebenfalls in der Crashbox integriert. Die Konfiguration der Crashbox, die die Steifigkeit in Abhängigkeit von dem Signal verändert, kann durch eine Auswertung des Signals innerhalb der Crashbox oder außerhalb der Crashbox erfolgen, wobei das Betätigungssignal für die Veränderung dann an der Crashbox, und zwar an der Aktorik anliegt. D.h. in einem solchen Fall hat die Crashbox eine Schnittstelle zu einer Auswerteeinheit, die die Signale der ersten Sensorik zur Erfassung einer Unfallsituation auswertet und in Abhängigkeit davon Signale für eine Aktorik der Crashbox zur Änderung der Steifigkeit bereitstellt.

Das erfindungsgemäße Plausibilisierungselement kann gemäß den abhängigen Ansprüche ausgebildet sein. Funktion dieses Plausibilisierungselements ist es, dass die Änderung der Steifigkeit zusätzlich zu dem Signal der ersten Sensorik beeinflusst wird. Dabei sind prinzipiell zwei Konfigurationen möglich, zum einen liefert die Auswertung des Sensorsignals ein Ansteuersignal, das in Abhängigkeit von dem Verhalten des Plausibilisierungselements durchgelassen wird oder nicht, wobei das Ansteuersignal in Abhängigkeit von dem Signal der ersten Sensorik erzeugt wird, mehr als zwei Stufen der Steifigkeit auswählen kann. Eine andere Konfiguration ist, dass es lediglich zwei Stufen der Steifigkeit gibt und dann die Auswertung des ersten Signals, beispielsweise eine null oder eins liefert und ebenfalls das Plausibilisierungselement eine null oder eins liefert und die logische Verundung, die elektrisch oder mechanisch erfolgen kann, zur Einstellung der Steifigkeit führt. Wie gesagt, vorzugsweise soll eine Crashbox im Anfangszustand die größte Steifigkeit aufweisen, um nicht bei einem schweren Crash auf diese größte Steifigkeit schalten zu müssen. D.h. die Steifigkeit wird, wie aus den abhängigen Ansprüchen hervorgeht, vorzugsweise nur gesenkt. Wobei diese Ansteuerung auch reversibel sein kann, beispielsweise wenn die Ansteuerung im Ergebnis nicht notwendig war, sondern wieder zurückgestellt wird, weil der prognostisierte Crash nicht vorgekommen ist. Die Ansteuerung der Steifigkeit kann auch zusätzlich noch von anderen Sensoren, die sich außerhalb der Crashbox befinden, erfolgen, beispielsweise durch weitere Crash- oder Fahrdynamik- oder Precrashsensoren (=Umfeldsensoren).

Durch die in den abhängigen Ansprüchen aufgeführten Maßnahmen und Weiterbildung sind vorteilhafte Verbesserungen, die in den unabhängigen Patentansprüchen angegebenen Crashbox oder des in dem unabhängigen Patent angegebenen Verfahrens möglich.

Vorteilhaft ist dabei, dass die Crashbox einen Selbsthemmungsmechanismus aufweist, der bewirkt, dass ab einer vorbestimmten Deformation die Steifigkeit nicht mehr veränderbar ist. Der Selbsthemmungsmechanismus ist dabei das Plausibilisierungselement. Damit ist das Plausibilisierungselement mechanisch ausgebildet und benötigt keine weitere Sensorik, sondern ist intrinsisch in der Crashbox enthalten. Das Deformationselement, das den Selbsthemmungsmechanismus vorzugsweise aufweist, kann dabei so ausgeprägt sein, dass ein Steller oder eine Aktorik ab einer definierten Deformation nicht mehr schalten kann. Sobald eine relativ geringe Kraft auf der Crashbox herrscht, was bei einem Crash sehr schnell der Fall ist, befinden sich alle Bauteile der Crashbox unter Spannung, weil sie die Crashenergie absorbieren müssen. In diesem sogenannten Spannungszustand sind die ganzen Toleranzen und mechanischen Spiele nicht mehr wirksam bzw. aufgebraucht. Dies führt zu einer Verkantung der im Ruhezustand beweglichen Teile, die den Aktuator repräsentieren.

Des ist weiterhin vorteilhaft, dass wie oben erwähnt die Crashbox derart konfiguriert ist, dass die Steifigkeit nur absenkbar ist. Dies ist eine vorteilhafte Maßnahme, da bei einem schweren Crash die Steifigkeit der Crashbox am Maximum sein muss und eine Umschaltung auf dieses Maximum Gefahr birgt, dass einmal die Umschaltung gar nicht funktioniert, zu spät kommt oder nicht richtig funktioniert.

Erfindungsgemäß ist das Plausibilisierungselement eine zweite Sensorik. Diese zweite Sensorik kann im Vergleich zur ersten Sensorik ein unterschiedliches physikalisches Funktionsprinzip verwenden. Alternativ dazu ist es natürlich möglich das gleiche Funktionsprinzip zu verwenden. Verwendet man unterschiedliche Funktionsprinzipien ist eine vorzugsweise zu verwendende Konfiguration als erste Sensorik eine Hochfrequenzsensorik und als eine zweite Sensorik eine Beschleunigungssensorik zu verwenden. Bei einer Hochfrequenzsensorik werden Hochfrequenzsignale von dieser Sensorik ausgesandt und die wieder empfangenen Hochfrequenzsignale weiter verarbeitet, um eine Aufprallgeschwindigkeit bzw. auch eine Deformationsgeschwindigkeit zu ermitteln. Durch die Anordnung der Sensorik im Crashboxinnern, werden auftretende Spannungen/Deformationen direkt vom Sensor gemessen, da sich die die vom Sensor fokussierte Fläche bspw. in Richtung des Sensors bewegt, d.h. sie baut Relativgeschwindigkeit auf. Die Geschwindigkeit kann beispielsweise durch eine Dopplermessung gewonnen werden. Bei der Beschleunigungssensorik handelt es sich üblicherweise um einen elektronischen Beschleunigungssensor, der vorzugsweise mikromechanisch hergestellt ist. Dabei wird üblicherweise eine Kapazität infolge der erfassten Beschleunigung verändert, so dass ein kontinuierlich durchstimmbares Signal, das die Beschleunigung repräsentiert, erzeugbar ist. Aber auch andere Prinzipien zur Erfassung der Beschleunigung sind möglich, beispielweise piezoresistiv oder auch eine mechanische Sensorik, wie beispielsweise ein Federmassesystem verwendet.

Bei der Verwendung einer Beschleunigungssensorik und einer Hochfrequenzsensorik ist es möglich, hochwertige Signale für die Crashdiskriminierung mit der Crashunterscheidung zu erzeugen, indem ein vollwertiger konventioneller so genannter Upfrontsensor verwendet wird und eine genaue Geschwindigkeitsmessung über einen Dopplereffekt der Hochfrequenzsensorik möglich ist. Bei einem Upfrontsensor handelt es sich um eine Aufprall- und/oder Precrashsensorik, die im Bereich der Fahrzeugfront angeordnet sind und daher nahe an einer Aufprallstelle angeordnet sind, wenn es sich um einen Frontaufprall im weitesten Sinn handelt. Das Signal für die Plausibilisierung kann vorzugsweise durch eine Integration des Beschleunigungssignals erzielt werden, indem damit ein grobes Maß einer Deformationsgeschwindigkeit erzielt wird. Dieses Maß kann mit einem oder mehreren Schwellwerten verglichen werden. Bei der Verwendung von zwei Beschleunigungssensoren ist es vorteilhaft, diese an der Front und der Rückplatte der Crashbox anzubringen. Die Beschleunigungssensoren, die dabei im wesentlichen in Fahrzeuglängsrichtung empfindlich. Eine zusätzliche Empfindlichkeitsachse ist möglich.

Die Deformationsgeschwindigkeit lässt sich direkt über eine Differenzbildung und anschließende Integration ermitteln. Für diese Sensorkonfiguration ergeben sich folgende Vorteile: wiederum ist eine hochwertige Signalerzeugung für eine Crashdiskriminierung möglich, indem ein vollwertiger konventioneller Upfrontsensor nachgebildet wird und eine genaue Messung der Deformationsgeschwindigkeit möglich ist, was nur bei einem Beschleunigungssensor nicht möglich ist, da die Härte bzw. Steifigkeit des Gegners zu diesem frühen Zeitpunkt nicht bekannt ist. Als Signal für die Plausibilisierung kann wiederum die Integration des Beschleunigungssignals von den beiden unabhängigen Beschleunigungssensoren verwendet werden, um grob die Deformationsgeschwindigkeit abzuschätzen.

Die Verwendung von zwei Sensoren, also sowohl für die Plausibilisierung als auch als Sensorik zur Erfassung des Unfallvorgangs ist es möglich, dass nicht nur zwei Stufen für die Einstellung der Steifigkeit möglich sind, sondern auch mehr, d.h. es sind dann auch Zwischenstufen bzw. Mittelstufen realisierbar. Eine Zwischenstufe bzw. Mittelstufe bezüglich der Steifigkeit ist vor allem beim Thema Crashkompatibilität relevant. Wird z.B. ein schweres Fahrzeug gegen ein leichtes Fahrzeug in Kollision gebracht, so hat das leichte Fahrzeug aufgrund seiner geringeren Maße Sicherheitsnachteile. Hier könnte das Problem für die Fahrzeuginsassen behoben sein, wenn das kleine Fahrzeug so hart wie möglich ist, und damit möglichst wenig Intrusion aufweist und das schwere Fahrzeug mittelhart ist, so dass es ein Stück von seiner Knautschzone dem kleinen Fahrzeug zur Verfügung stellt und schützt somit alle im Unfall verwickelten Insassen. Diese beiden Möglichkeiten können kombiniert werden oder separat verwendet werden. Bei den großen Fahrzeugen lediglich eine weiche Steifigkeit zu verwenden, könnte problematisch bezüglich der Insassen diesen großen Fahrzeugs sein.

Es ist auch von Vorteil, dass das Plausibilisierungselement ein Arbeitssignal ausgibt, wobei das Arbeitssignal einen Crashvorgang kennzeichnet und für eine Ansteuerung von Rückhaltemitteln verwendbar ist. Damit kann das Plausibilisierungselement als zusätzlicher Crashsensor verwendet werden. Das Arbeitssignal kann dabei die Crashschwere, einen Crashtyp oder andere geeignete Parameter, die einen Crashvorgang kennzeichnen, angeben. Das Arbeitssignal wird dann zu einem Steuergerät für die Ansteuerung solcher Rückhaltemittel übertragen und dieses Steuergerät verarbeitet dann mit einem Auswertealgorithmus dieses Arbeitssignal. Dabei kann diese Verarbeitung zu einem optimierten Zündzeitpunkt für Airbags und/oder Gurtstraffer führen. Es ist dabei möglich, dass das Arbeitssignal auch lediglich für eine Plausibilisierung der Zündentscheidung für die Airbags etc. genutzt wird. Dabei kann das Arbeitssignal dann von einem Systembaustein verarbeitet werden, der den Sicherheitscontroller zur Bestimmung dieser Plausibilisierung beinhaltet.

Ausführungsbeispiele der Erfindung sind in der Zeichnung dargestellt und werden in der nachfolgenden Beschreibung näher erläutert.

Es zeigen:
- Figur 1 ein grundlegender Aufbau der Crashbox zwischen Querträger und Längsträger;
- Figur 2 ein Deformationszeitdiagramm für die erfindungsgemäße Crashbox;
- Figur 3 ein erstes Blockdiagramm zur Erläuterung des erfindungsgemäßen Verfahrens;
- Figur 4 eine Konfiguration mit zwei Beschleunigungssensoren in der erfindungsgemäßen Crashbox und
- Figur 5 ein weiteres Blockdiagramm zur Erläuterung des erfindungsgemäßen Verfahrens.

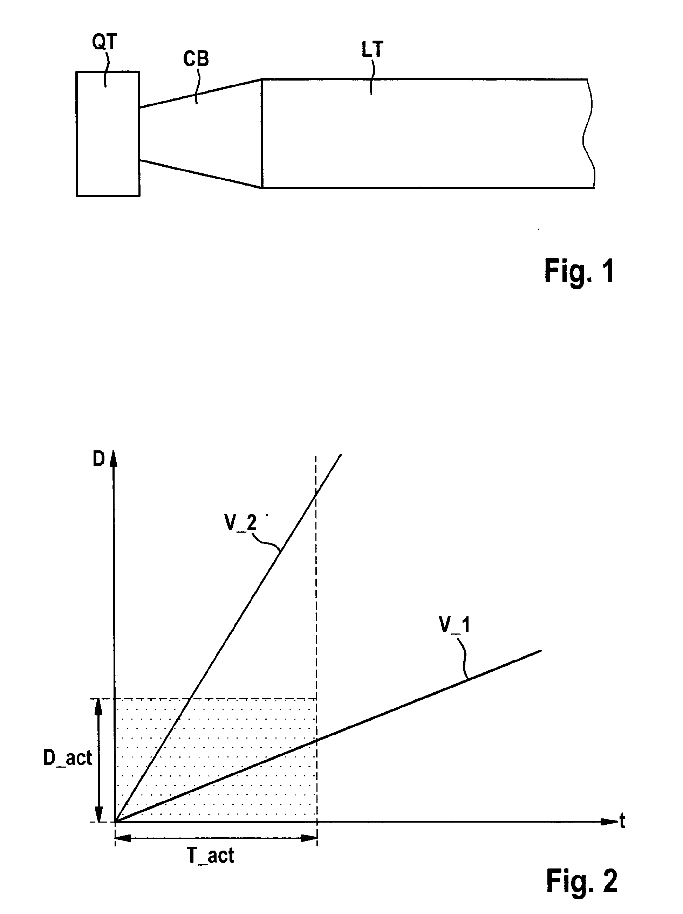

Figur 1 zeigt den grundlegenden Einbau einer adaptiven Crashbox CB zwischen einem Querträger QT und einem Längsträger LT eines Fahrzeugs. Da der Aufbau des Fahrzeugs symmetrisch zur Mittellinie ist, würde sich eine zweite Crashbox auf der anderen Fahrzeugseite in der gleichen Art und Weise befinden. Die Crashbox CB weist Verbindungsmittel auf, um mit dem Querträger QT und dem Längsträger LT verbunden zu werden. Als Verbindungstechniken können Verschraubungen, Vernietungen, Schweißungen, d.h. kraft- oder stoffschlüssige Verbindungen verwendet werden.

Figur 2 erläutert in einem Deformationszeitdiagramm, dass die Crashbox CB ab einer bestimmten Deformation nämlich D_act nicht mehr in der Steifigkeit veränderbar ist. Die Zeit T_act bezeichnet die Zeit für die Sensierung, Auswertung und Stellerbewegung während D_act die maximale Deformation angibt, die noch ein Stellen einer Aktorik zulässt. Mit der Kurve V_1 ist eine Deformation bei kleiner Geschwindigkeit und mit der Kurve V_2 eine Deformation bei hoher Geschwindigkeit bezeichnet. Letztlich kann nur im gepunkteten Bereich noch gestellt werden. Außerhalb des gepunkteten Bereichs, wenn t > T_act ist, befindet sich die adaptive Crashbox in dem bereits erwähnten Spannungszustand. Die Toleranzen und mechanischen Spiele sind nicht mehr wirksam bzw. aufgebraucht; was zu einer Verkantung der im Ruhezustand beweglichen Teile, die den Aktuator repräsentieren führt.

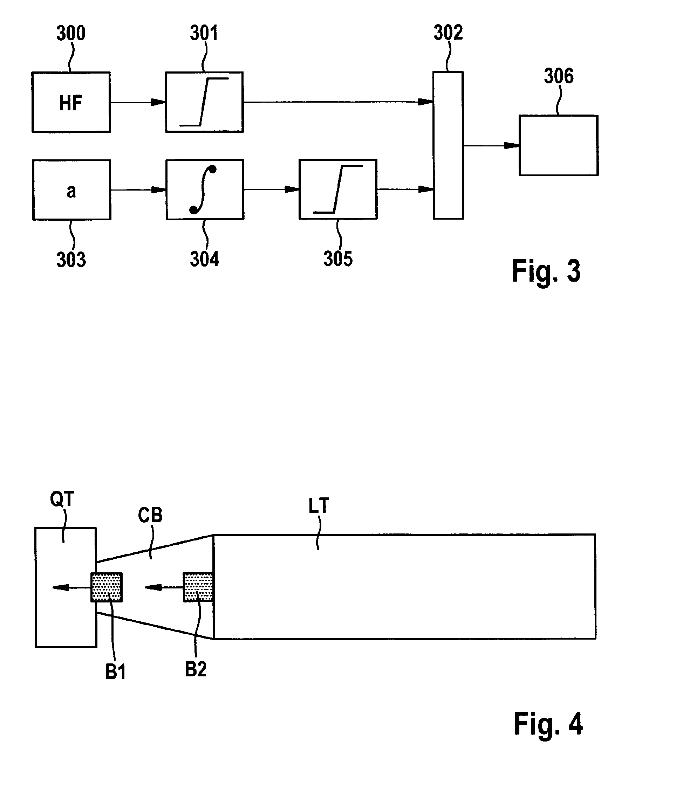

Figur 3 zeigt in einem Blockschaltbild die Funktion des erfindungsgemäßen Verfahrens bzw. die Arbeitsweise der erfindungsgemäßen Crashbox. Verwendet wird vorwiegend eine Hochfrequenzsensorik HF 300 als erste Sensorik und als Plausibilitätselement eine Beschleunigungssensorik 303, die auch zusätzlich zur Erzeugung des Ansteuersignals verwendet werden kann. Die Hochfrequenzsensorik 300 liefert als Parameter, beispielsweise die Relativgeschwindigkeit oder Deformationsgeschwindigkeit, die einem Schwellwertschalter 301 zugeführt wird. Dort wird diese Geschwindigkeit mit einem Schwellwert verglichen und in Abhängigkeit von diesem Vergleich geht ein Signal an ein Und-Gatter 302. Ist der Schwellwert übertroffen, erfolgt beispielsweise keine Ansteuerung der Aktorik, ist er unterschritten, erfolgt eine solche Ansteuerung. Wobei jedoch auch ein Mindestschwellwert zusätzlich überschritten werden sollte. Das Beschleunigungssignal im Block 303 wird einem Integrator 304 zugeführt, um ein grobes Maß für die Deformationsgeschwindigkeit zu erhalten. Dies wird einem Schwellwertschalter 305 zugeführt und je nach Vergleichsergebnis wird das Und-Gatter 302 mit einem logischen Signal beaufschlagt. Nur wenn die Plausibilisierung erfüllt ist und die Hochfrequenzsensorik 300 einen solchen Parameter geliefert hat, der eine Ansteuerung der Aktorik der Crashbox CB notwendig macht, wird dann im Verfahrensschritt oder Block 306 eine solche Ansteuerung vorgenommen. Ist die Steifigkeit im Anfangszustand immer auf den Maximalwert eingestellt, dann wird die Steifigkeit nur dann reduziert, wenn die Parameter, die die Sensoren erfassen einen leichteren Crash, beispielsweise einen so genannten AZT-Crash anzeigen.

Figur 4 zeigt schematisch die Platzierung von zwei Beschleunigungssensoren B1 und B2 in der Crashbox CB. Wiederum ist die Crashbox CB zwischen Querträger QT und dem Längsträger LT eingebaut. Die Beschleunigungssensorik B1 ist an der Vorderplatte der Crashbox CB und die Beschleunigungssensorik B2 an der Rückplatte der Crashbox CB angeordnet. Auf diese Befestigung kann Kraft und/oder stoff- und formschlüssig erfolgen. Die Beschleunigungssensoren sind zumindest in Fahrzeuglängsrichtung, d.h. in x-Richtung empfindlich.

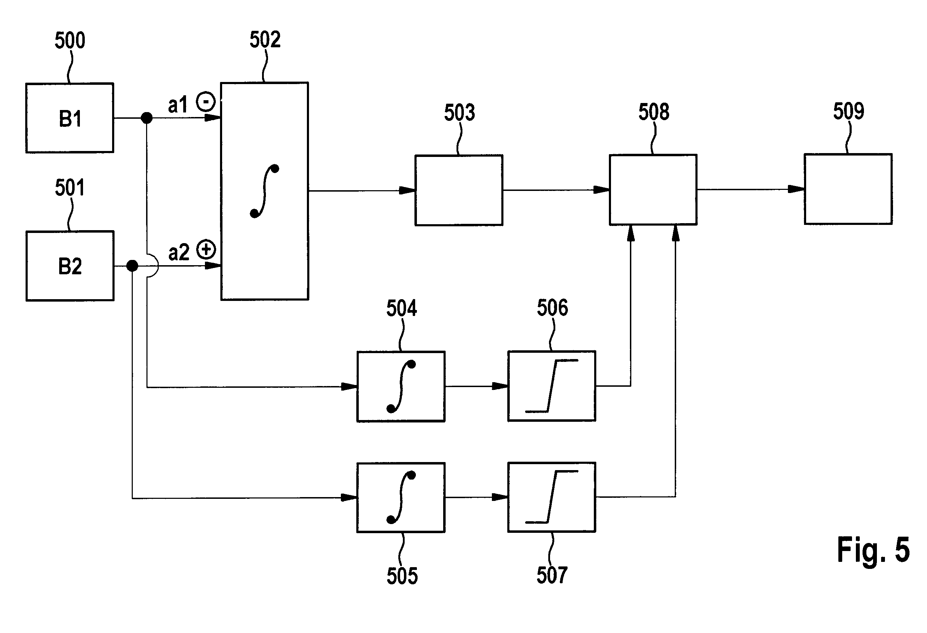

Figur 5 zeigt wie die Signal der Beschleunigungssensoren B1 und B2 verarbeitet werden können. Die Ausgangssignale der Beschleunigungssensoren 500 und 501, nämlich a1 und a2, werden am Integrator 502 zugeführt, wobei die Eingänge so beschaffen sind, dass eine Differenz der beiden Signale, nämlich a2 - a1 gebildet wird. Diese Differenz wird im Integrator 502 integriert. In Abhängigkeit davon, erfolgt im Block 503 die Einstellung der Steifigkeit. Dieses Einstellungssignal wird im Block 508 nur dann durchgelassen, wenn die Plausibilität erfüllt ist. Die Plausibilität wird ebenfalls von den Signalen a1 und a2 abgeleitet. Dazu werden die Signale a1 und a2 jeweils integriert und zwar in den Integratoren 504 und 505. Die Ausgangssignale können hier vorzugsweise jeweiligen Schwellwertentscheidern 506 und 507 zugeführt werden, um die Deformationsgeschwindigkeit auf einen jeweiligen Schwellwert zu prüfen. Die Ausgangssignale der Schwellwertentscheider 506 und 507 werden dann dem Block 508 zugeführt, um festzustellen ob die Plausibilität erfüllt ist. Ist das der Fall, dann wird das Einstellungssignal aus dem Block 503 durchgelassen zum Block 509, in dem die Einstellung der Steifigkeit erfüllt, in dem beispielsweise die Einstellungssignale an die Aktorik in der Crashbox CB übermittelt werden.

## Patentansprüche

1. Crashbox (CB) mit veränderbarer Steifigkeit, wobei die Crashbox zum Einbau zwischen einem Querträger (QT) und einem Längsträger (LT) eines Fahrzeugs konfiguriert ist, wobei die Crashbox eine erste Sensorik (B1) zur Erfassung einer Unfallsituation aufweist und die Sensorik (B1) ein Signal ausgibt, wobei die Crashbox (CB) derart konfiguriert ist, dass die Steifigkeit in Abhängigkeit von dem Signal veränderbar ist, **dadurch gekennzeichnet, dass** die Crashbox (CB) ein Plausibilisierungselement (B2) aufweist, das die Änderung der Steifigkeit zusätzlich zu dem Signal beeinflusst, wobei das Plausibilisierungselement (B2) eine zweite Sensorik ist.

2. Crashbox nach Anspruch 1 **dadurch gekennzeichnet, dass** die Crashbox einen Selbsthemmungsmechanismus als das Plausibilisierungselement aufweist, wobei der Selbsthemmungsmechanismus bewirkt, dass ab einer vorbestimmten Deformation die Steifigkeit nicht mehr veränderbar ist.

3. Crashbox nach Anspruch 1 oder 2 **dadurch gekennzeichnet, dass** die Crashbox (CB) derart konfiguriert ist, dass die Steifigkeit nur absenkbar ist.

4. Crashbox nach einem der vorangegangenen Ansprüche, **dadurch gekennzeichnet, dass** die erste und die zweite Sensorik (B1, B2) jeweils unterschiedliche physikalische Funktionsprinzipien verwenden.

5. Crashbox nach Anspruch einem der vorangegangenen Ansprüche **dadurch gekennzeichnet, dass** die erste Sensorik eine Hochfrequenzsensorik und die zweite Sensorik eine Beschleunigungssensorik (B1) aufweisen.

6. Crashbox nach einem der vorangegangenen Ansprüche, **dadurch gekennzeichnet, dass** die erste und die zweite Sensorik jeweils eine Beschleunigungssensorik (B1, B2) aufweisen.

7. Crashbox nach Anspruch 6 **dadurch gekennzeichnet, dass** die erste Beschleunigungssensorik der ersten Sensorik im Bereich einer Frontplatte der Crashbox und die zweite Beschleunigungssensorik der zweiten Sensorik im Bereich einer Rückplatte der Crashbox (CB) angeordnet sind, wobei die erste und die zweite Beschleunigungssensorik im Wesentlichen in Fahrzeuglängsrichtung empfindlich sind.

8. Crashbox nach einem der vorangegangenen Ansprüche, **dadurch gekennzeichnet, dass** die Steifigkeit in mehr als zwei Stufen einstellbar ist.

9. Crashbox nach Anspruch 1, **dadurch gekennzeichnet, dass** das Plausibilisierungselement ein Arbeitssignal ausgibt, wobei das Arbeitssignal einen Crashvorgang kennzeichnet und für eine Ansteuerung von Rückhaltemitteln verwendbar ist.

10. Verfahren zur Veränderung einer Steifigkeit einer Crashbox (CB), die zum Einbau zwischen einem Querträger (QT) und einem Längsträger (L T) ans Fahrzeug konfiguriert wird, wobei eine erste in der Crashbox eingebaute Sensorik (B1) zur Erfassung einer Unfallsituation ein Signal ausgibt, wobei die Steifigkeit in Abhängigkeit von dem Signal verändert wird, **dadurch gekennzeichnet, dass** ein in der Crashbox eingebautes Plausibilisierungselement die Änderung der Steifigkeit zusätzlich zu dem Signal beeinflusst, wobei das Plausibilisierungselement (B2) eine zweite Sensorik ist.

## Claims

1. Crashbox (CB) with variable stiffness, wherein the crashbox is configured for installation between a transverse member (QT) and a longitudinal member (LT) of a vehicle, wherein the crashbox has a first sensor system (B1) for sensing an accident situation, and the sensor system (B1) outputs a signal, wherein the crashbox (CB) is configured in such a way that the stiffness can be modified as a function of the signal, **characterized in that** the crashbox (CB) has a plausibility-checking element (B2) which influences the modification in the stiffness in addition to the signal, wherein the plausibility-checking element (B2) is a second sensor system.

2. Crashbox according to Claim 1, **characterized in that** the crashbox has a self-locking mechanism as the plausibility-checking element, wherein the self-locking mechanism has the effect that starting from a certain degree of deformation the stiffness can no longer be modified.

3. Crashbox according to Claim 1 or 2, **characterized in that** the crashbox (CB) is configured in such a way that the stiffness can only be reduced.

4. Crashbox according to one of the preceding claims, **characterized in that** the first and second sensor systems (B1, B2) each use different physical functional principles.

5. Crashbox according to one of the preceding claims, **characterized in that** the first sensor system has a high-frequency sensor system, and the second sensor system has an acceleration sensor system (B1).

6. Crashbox according to one of the preceding claims, **characterized in that** the first and the second sensor systems each have an acceleration sensor system (B1, B2).

7. Crashbox according to Claim 6, **characterized in that** the first acceleration sensor system of the first sensor system is arranged in the region of a front panel of the crashbox, and the second acceleration sensor system of the second sensor system is arranged in the region of a back panel of the crashbox (CB), wherein the first and the second acceleration sensor systems are sensitive essentially in the longitudinal direction of the vehicle.

8. Crashbox according to one of the preceding claims, **characterized in that** the stiffness can be adjusted in more than two stages.

9. Crashbox according to Claim 1, **characterized in that** the plausibility-checking element outputs a working signal, wherein the working signal characterizes a crash process and can be used for actuating restraint means.

10. Method for modifying the stiffness of a crashbox (CB) which is configured for installation between a transverse member (QT) and a longitudinal member (LT) of a vehicle, wherein a first sensor system (B1) which is installed in the crashbox and has the purpose of sensing an accident situation outputs a signal, wherein the stiffness is modified as a function of the signal, **characterized in that** a plausibility-checking element which is installed in the crashbox influences the modification in the stiffness in addition to the signal, wherein the plausibility-checking element (B2) is a second sensor system.

## Revendications

1. Absorbeur de choc (CB) à rigidité variable, l'absorbeur de choc étant configuré pour être monté entre une traverse de caisse (QT) et un longeron (LT) d'un véhicule, l'absorbeur de choc présentant un premier dispositif de détection (B1) pour détecter une situation d'accident et le dispositif de détection (B1) délivrant un signal, l'absorbeur de choc (CB) étant configuré de telle sorte que la rigidité est modifiable en fonction du signal, **caractérisé en ce que** l'absorbeur de choc (CB) présente un élément d'établissement de la plausibilité (B2), lequel influence la modification de la rigidité en plus du signal, l'élément d'établissement de la plausibilité (B2) étant un deuxième dispositif de détection.

2. Absorbeur de choc selon la revendication 1, **caractérisé en ce que** l'absorbeur de choc présente un mécanisme de blocage automatique en tant qu'élément d'établissement de la plausibilité, le mécanisme de blocage automatique ayant pour effet qu'à partir d'une déformation prédéfinie, la rigidité n'est plus modifiable.

3. Absorbeur de choc selon la revendication 1 ou 2, **caractérisé en ce que** l'absorbeur de choc (CB) est configuré de telle sorte que la rigidité ne peut être que diminuée.

4. Absorbeur de choc selon l'une des revendications précédentes, **caractérisé en ce que** le premier et le deuxième dispositif de détection (B1, B2) utilisent respectivement des principes de fonctionnement physiques différents.

5. Absorbeur de choc selon l'une des revendications précédentes, **caractérisé en ce que** le premier dispositif de détection présente un dispositif de détection à haute fréquence et le deuxième dispositif de détection présente un dispositif de détection d'accélération (B1).

6. Absorbeur de choc selon l'une des revendications précédentes, **caractérisé en ce que** le premier et le deuxième dispositif de détection présentent respectivement un dispositif de détection d'accélération (B1, B2).

7. Absorbeur de choc selon la revendication 6, **caractérisé en ce que** le premier dispositif de détection d'accélération du premier dispositif de détection est disposé dans la zone d'un panneau avant de l'absorbeur de choc et le deuxième dispositif de détection d'accélération du deuxième dispositif de détection est disposé dans la zone d'un panneau arrière de l'absorbeur de choc (CB), les premier et deuxième dispositifs de détection d'accélération étant pour l'essentiel sensibles dans le sens longitudinal du véhicule.

8. Absorbeur de choc selon l'une des revendications précédentes, **caractérisé en ce que** la rigidité peut être réglée en plus de deux niveaux.

9. Absorbeur de choc selon la revendication 1, **caractérisé en ce que** l'élément d'établissement de la plausibilité délivre un signal de travail, le signal de travail caractérisant un processus de collision et pouvant être utilisé pour une commande de moyens de retenue.

10. Procédé de modification d'une rigidité d'un absorbeur de choc (CB), lequel est configuré pour être monté entre une traverse de caisse (QT) et un longeron (LT) d'un véhicule, un premier dispositif de détection (B1) pour détecter une situation d'accident monté dans l'absorbeur de choc délivrant un signal, la rigidité étant modifiée en fonction du signal, **caractérisé en ce qu'**un élément d'établissement de la plausibilité intégré monté dans l'absorbeur de choc influence la modification de la rigidité en plus du signal, l'élément d'établissement de la plausibilité (B2) étant un deuxième dispositif de détection.
